Europäisches Patentamt

(19) European Patent Office

Office européen des brevets

(11) Publication number: **0 121 603**
**B1**

(12) **EUROPEAN PATENT SPECIFICATION**

(45) Date of publication of patent specification: **29.06.88**

(21) Application number: **83112892.1**

(22) Date of filing: **21.12.83**

(51) Int. Cl.⁴: **G 06 F 3/153**

(54) Personal computer attachment to host system display stations.

(30) Priority: **07.03.83 US 473058**

(43) Date of publication of application:
**17.10.84 Bulletin 84/42**

(45) Publication of the grant of the patent:
**29.06.88 Bulletin 88/26**

(84) Designated Contracting States:
**DE FR GB**

(56) References cited:

**WIRELESS WORLD, vol. 83, no. 1496, April 1977, pages 65-69, Haywards Heath, Sussex, GB; S. FEDIDA: "Operation of the system: Terminals and codes"**

(73) Proprietor: **International Business Machines Corporation
Old Orchard Road
Armonk, N.Y. 10504 (US)**

(72) Inventor: **Bryan, Barry Lee
46 Country Club Lane
Woodstock New York 12498 (US)**
Inventor: **Druckerman, Martin
85 Colburn Drive
Poughkeepsie New York 12603 (US)**
Inventor: **McDowell, Allen William
Tuytenbridge Road
Lake Katrine New York 12449 (US)**
Inventor: **Schneider, Ira Howard
79 Emerson Street
Kingston New York 12401 (US)**

(74) Representative: **Grant, Iain Murray
IBM United Kingdom Limited Intellectual Property Department Hursley Park
Winchester Hampshire SO21 2JN (GB)**

## 0 121 603

### Description

The present invention generally relates to personal computer attachment to display stations of data processing systems of the type having a central host computer and a plurality of display stations each typically having a keyboard and a display, such as a CRT, and depending on the host for processing power. The kind of attachment to which this invention relates allows the display stations to operate with the host, as before, or with the personal computer and, also, allows the transfer of files between the host and the personal computer and the printing of data displayed on the screen of the CRT.

Data processing systems are known where a plurality of display systems communicate with a central host computer. These display systems typically include a base unit which acts as a display and supports a keyboard for operation as a keyboard/display terminal that communicates with the host via a controller. The terminal may interface with a plurlatiy of features connected thereto such as a card reader or light pen. The base unit and the features receive transmissions from the controller via a feature bus in the base unit and also transmit to the controller via this feature bus. The base unit also provides priority control in permitting features to respond to a controller poll. Commands are also directly addressable to the base unit and features by the controller. Typical of such systems are the IBM 3270 information display system, the IBM 3274 control unit and the IBM 3278 or 3279 display stations.

In such systems, the display stations are used to access data and run programs on the host. Storage of data or printing a hard copy typically are accomplished using bulk storage media or printers associated with the host computer. These may not always be readily accessible or available to a display station operator. Moreover, some data may be sensitive or confidential, and the operator may desire to exercise direct control over the bulk storage media on which the data is stored or the hard copy produced by the printer. Current display stations do not provide this access or flexibiltiy. Recently, small desk top or so-called personal computers have been introduced on the market. These typically include a system unit containing a microprocessor, read only storage (ROS), random access memory (RAM), and various adapters connected to the system unit bus to allow connection of a keyboard, a CRT display, one or more floppy diskette drives, and a printer. A personal computer would provide the display station operator with accessibility to both bulk storage media, in this case a floppy diskette, and a printer, but to simply provide the display station operator with a disassociated personal computer would be a duplication of equipment and no ability to use host files on the personal computer or vice versa. To embed a small processor in the display station in such a way that it forms the control node of that station, as is proposed in IBM Technical Disclosure Bulletin, vol. 24, No. 7A, December 1981, pages 3533 and 3534, despite the use of the term "attachment" therein, does not solve the problems of a user who already owns a display station without processing power, nor does it permit certain operations, involving both the host and the personal computer to proceed in parallel, as does the proposal of the present invention as will become apparent from the description that follows.

It is therefore an object of this invention to provide a personal computer attachment for a display station that will allow the display station operator to operate the display station in either a host mode or a personal computer mode without duplication of equipment in such a way that will allow, at least, transfer of files between the host and the personal computer and vice versa.

The present invention as set forth in Claim 1 provides a personal computer attachment for a display station of the type that communicates with a host computer, the display station having a display unit and a keyboard, the display unit having display means for displaying image data and first buffer means for receiving image data from the host computer and supplying the image data to the display means, the attachment comprising, a personal computer including a system bus, a microprocessor and memory means connected to the system bus, the memory means including second buffer means for supplying image data to a display means; switch means connected to the display means for selectively supplying host image data from the first buffer means in the display unit or personal computer data from the second buffer means in the personal computer; and adapter means connected to the personal computer system bus for communicating with the display unit, the keyboard being attached to the adapter means for selectively inputting data to the host computer or the personal computer, the adapter means including control means responsive to a keyboard input for controlling the switch means.

The attachment is made, as disclosed hereinafter, between the feature bus of the base unit of the display station and the system unit of the personal computer. Both the keyboard and the display station can be used in either a host mode or a personal computer mode in response to commands entered on the keyboard by the display station operator. For purposes of providing a specific example of the invention, the following description is directed to the attachment of the IBM Personal Computer to the IBM 3278 (or 3279) display station. It will be understood by those skilled in the art, however, that the invention may be practiced with other so-called personal computers or sub-units thereof and other display units manufactured by others than the International Business Machines Corporation.

The 3278 Personal Computer Attachment Feature (PCAT) provides a method for combining the IBM 3278 Display Station with the IBM Personal Computer. It uses the 3278 display and keyboard and does not require the display or keyboard of the Personal Computer. PCAT allows existing host programs to be run unmodified, and also allows most DOS base PC programs to run unmodified. These two operations are referred to as "Host Mode" and "PC Mode". They can run concurrently in the PCAT with no interference

2

between the programs. An additional option is offered to provide data transfer between Personal Computer and host program.

The PCAT uses the existing Personal Computer System Unit. There are no hardware or software modifications required. The feature does, however, add a new adapter card and some new software (called an interrupt handler) to use the 3278 display and keyboard. No host hardware or software modification are necessary to operate the PCAT. The PCAT is designed to maintain the integrity of the host session in the event of a disruption in the Personal Computer operation (caused by program, hardware failure, or power failure).

The PCAT consists of three major sub-features. The first is the 3278 PC Attachment Feature and contains the modification to the 3278 to accept the output of one of two PC video adapters; either the monochrome adapter or the colour graphics adapter.

The second sub-feature consists of a new adapter for the PC (called the 3278 Adapter) and a group of interconnecting cables. This sub-feature also includes a 5 1/4 inch diskette. On that diskette is an interrupt handler program, some sample application programs for the host computer and the Personal Computer to support file transfer and screen capture, and installation and diagnostic programs.

The third sub-feature is a modification to the 3274 microcode which will support data transfer (both file transfer and screen capture).

The Personal Computer System Unit consists of a keyboard adapter, an 8088 microprocessor with 40K of ROS and a group of five I/O slots which can have diskette adapters, printer adapters, additional memory, etc. Integral to the system unit but looking like it was attached via the I/O bus is 64K of RAM.

The 3278 has some digital logic and a regeneration buffer. The digital logic includes a keyboard adapter and the feature bus. These are used as part of the PCAT feature. This digital logic attaches to a 3274 control unit via an interface commonly referred to as the "DCA" for device control adapter. The output of the digital logic normally goes through some analog circuits to generate an image on the face of the CRT. An additional circuit function (called the analog input switch) is introduced between the digital logic and the analog logic. This allows the analog logic to be driven from either the normal digital logic of the 3278 or from the output of a video adapter plugged into the PC System Unit. The state of this switch is controlled by an external source. In the case of PCAT, this external source is the 3278 Adapter in the PC.

The 3278 Adapter is packaged as a PC Adapter Card and plugs into one of the I/O slots and consists of four major sub-functions. The first of these is the PC I/O interface function which allows the 3278 Adapter to meet the interface of the I/O slots of the PC.

The second sub-function of the 3278 Adapter is the analog input switch control. These circuits (which are controlled by the PC program) will cause the analog input switch in the 3278 to switch states. Thus a PC program has the capability to determine what is displayed on the face of the CRT; either the 3278 host image or the Personal Computer Display Adapter image. Because the analog switch is introduced in the position just described, the 3278 regeneration buffer and its supporting logic operate just as they did before installation of the PCAT feature. The same is true for the regeneration buffer and its supporting logic in the display adapter of the Personal Computer. This allows the host program and the Personal Computer program to continue to generate images and send them to their respective regeneration buffers, thus allowing concurrent operation of both the host program and the Personal Computer program.

The third sub-function of the 3278 Adapter is the two-way keyboard adapter. It operates in conjunction with the PC program. An unmodified 3278 keyboard is plugged into the two-way keyboard adapter using the existing 3278 keyboard cable and connector. The two-way keyboard adapter accepts keystroke scan codes from the 3278 keyboard and feeds them to the Personal Computer System Unit memory. The PC progam is expected to interrogate these scan codes in memory, alter them (if needed), send them back to the two-way keyboard adapter and direct whether the adapter output is sent to the existing keyboard adapters in the 3278 or Personal Computer. The program that supports this function is called the interrupt handler. The interrupt handler also monitors the 3278 keyboard operation for a unique key sequence which is the way the operator requests the interrupt handler to switch modes. When in the host mode, the CRT image and keystrokes are associated with the host program; when in the PC mode, the CRT image and keystrokes are associated with the PC program. This is a toggle operation; that is, when a key is hit once, it switches from one mode to the other, and when hit again, it switches back. An inherent capability of this design is that a PC program can generate keystrokes to the 3278 or Personal Computer System Unit which are identical to those a human operator could have generated.

The fourth sub-function is the feature bus adapter which provides circuits to connect the 3278 adapter to the feature bus of the 3278. The feature bus is normally an internal bus of the 3278 and exists to support such features as light pen, magnetic stripe readers, programmable symbol sets, etc. This feature bus is extended outside the 3278 to the mating portion of the PC adapter to provide a relatively high speed two-way path for sending data from the host to the Personal Computer System Unit and vice versa.

The function referred to as "Data Transfer" is divided into two sub-functions; file transfer and screen capture. In order to make use of this feature bus capability, a modification in the microcode of the 3274 is provided. This modification in the microcode will recognise additional 3270 structured fields and direct the data sent from the host to the feature bus rather than to the 3278 regeneration buffer. A program in the Personal Computer can accept that data and act on it immediately or store it on diskette for later use with other PC program. In addition, that program will take data from the diskette and send it via the feature bus and the 3274 to the host.

The ability for a PC program to generate 3278 keystrokes enables the function called "upload" to be performed. Using the upload function, the operator invokes a keystroke generation program in the PC. This program produces the keystrokes which are sent to the host and appear to be macro-language instructions. These instructions are a bootstrap program which bring in the rest of the file transfer program. This file transfer program is a private exec which is permanently stored and available for use anytime the operator invokes it. It only requires this upload once.

The other sub-function is screen capture. The only place within the display sub-system that the screen image resides is in the regeneration buffer of 3278. Additional microcode is provided in the 3274 to unload that screen image from the regeneration buffer of the 3278 into the 3274 and redirect it out through the feature bus to the PC System Unit. A program in the PC System Unit will write this image to diskette or to the printer adapter giving the capability for local copy.

An important integrity aspect of the design is that if the Personal Computer application fails, then the operator can, using the keystroke sequence, switch to host mode and continue the host operation. The host will see this as a temporarily "unattended terminal". This is made possible because the front end of the two-way keyboard adapter is powered directly from the 3278. Additionally, if power is removed from the personal computer, then keystroke data is redirected to the display station rather than the personal computer without invoking the switch-over key sequencing.

The present invention will be described further by way of example with reference to an embodiment thereof as illustrated in the accompanying drawings, in which:

Figure 1 is a perspective view of a 3278 display station flanked by an IBM Personal Computer System Unit and a printer;

Figure 2 is a pictorial representation of the IBM Personal Computer and the various adapter options available including the 3278 attachment adapter;

Figure 3 is a block diagram of the 3278 display station and the personal computer showing how they are interfaced with the 3278 attachment adapter;

Figure 4 is a detailed block diagram of the 3278 attachment adapter;

Figure 5 is a block diagram of the feature command decoder of the 3278 attachment adapter;

Figure 6 is a block diagram of the feature status register of the 3278 attachment adapter;

Figure 7 is a block diagram of the feature poll register of the 3278 attachment adapter; and

Figure 8 is a block diagram of the keyboard data paths.

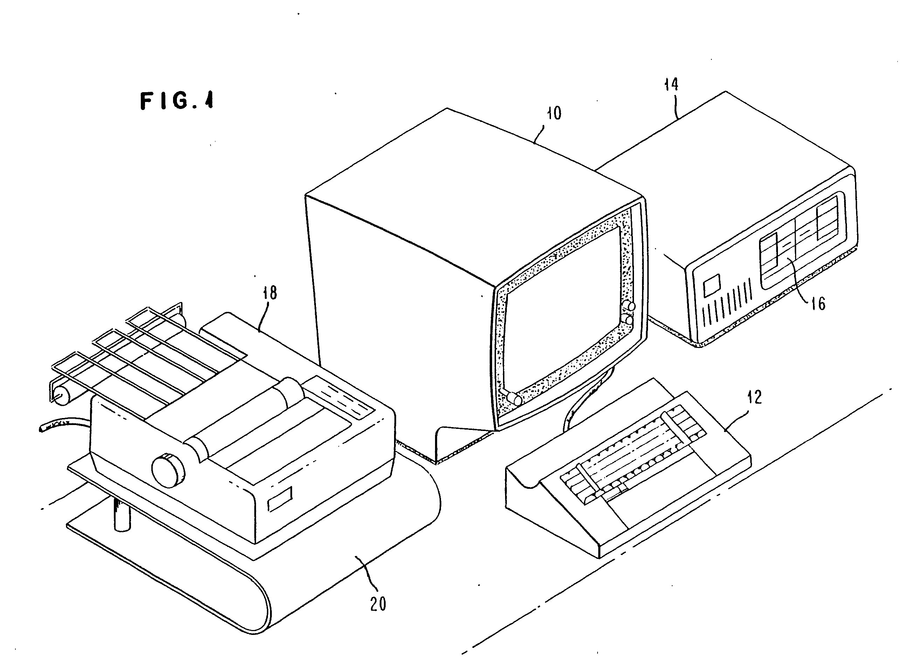

Referring now to the drawings, and more particularly to Figure 1, a 3278 display station is shown as comprising a CRT display 10 and a keyboard 12. On the right of the CRT display 10 is an IBM Personal Computer System Unit 14 which may have one or two floppy diskette drives 16 installed in the system unit cabinet. On the left of the CTR display 10 is a printer 18, here shown on an optional stand 20. The printer 18 is connected to and controlled by the personal computer system unit.

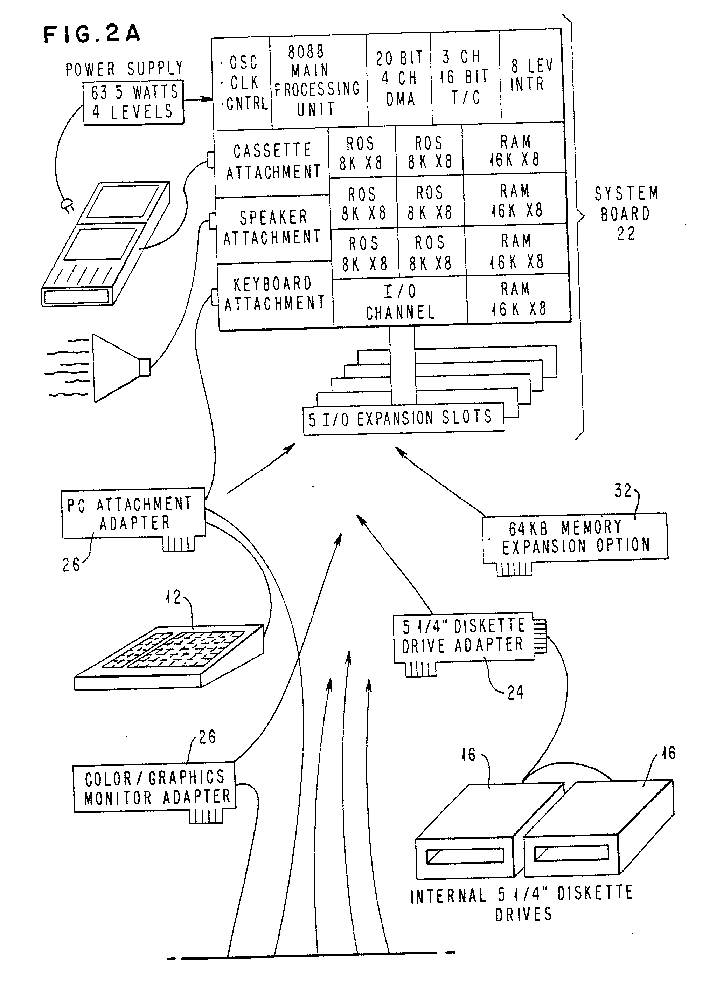

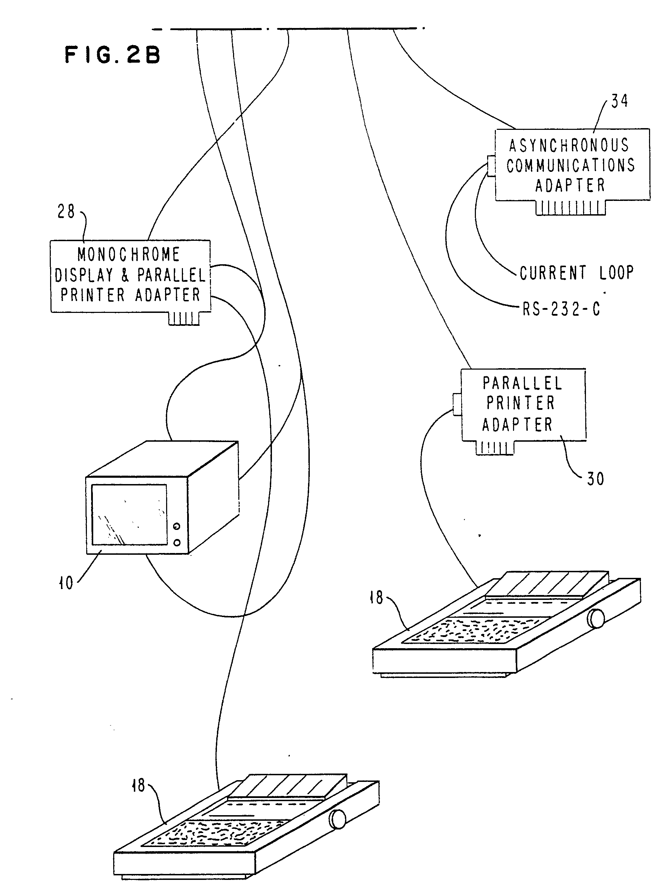

Figure 2 shows the IBM Personal Computer System Unit mother board 22 mapped to generally show the location of the 8088 microprocessor, the read only storage (ROS), the random access memory (RAM), the keyboard attachment, and the five I/O expansion slots as well as other parts of the system unit. A number of adapters in the form of printed circuit boards are available which are designed to be plugged into one of the five I/O slots. For example, a diskette drive adapter 24 capable of supporting up to four diskette drives would be plugged into one of the I/O slots. This in turn would be connected to the two internal diskette drives 16. Two monitor adapters are available for the IBM Personal Computer System Unit; a colour graphics monitor adapter 26 and a monochrome display and parallel printer adapter 28. Typically, one or the other of adapters 26 or 28 would be plugged into one of the I/O slots and a connection made from the adapter to the base unit of the 3278 display station. If the monochrome display and parallel printer adapter is used, then a cable connection is made from the adapter 28 to the printer 18. On the other hand, if the colour graphics monitor adapter 26 is used, it is necessary to plug the parallel printer adapter 30 into one of the I/O slots and make the cable connection from this adapter to the printer 18. Another I/O slot might have plugged into it a RAM expansion card 32 and/or an asynchronous communications adapter 34, the latter having a cable connection to a modem (not shown) for connection to a telephone line, for example.

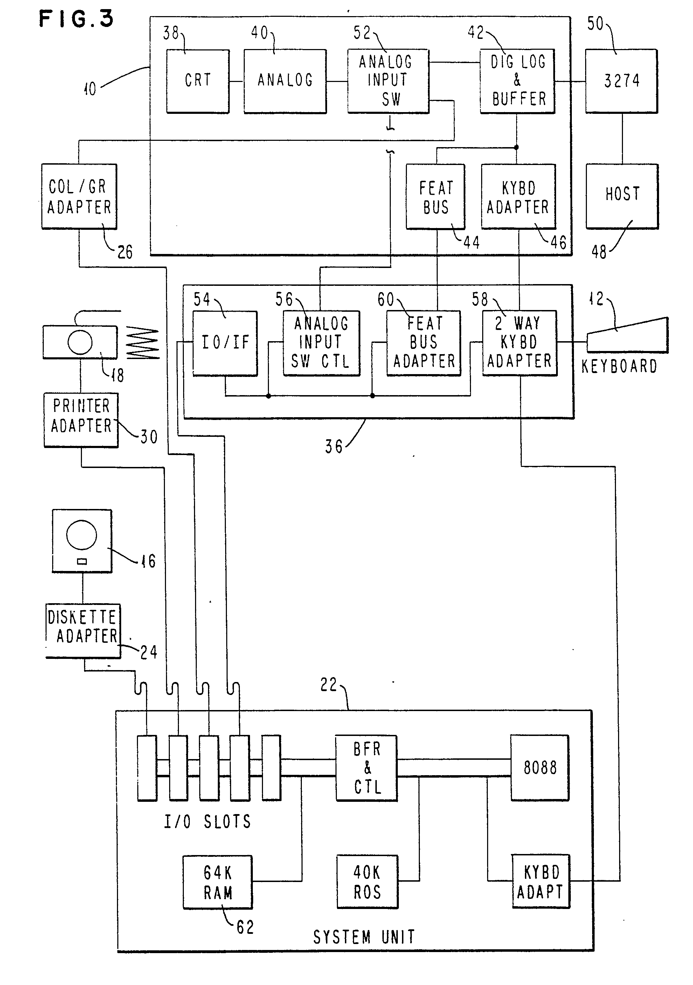

A 3278 attachment adapter 36 is provided to be plugged into one of the five I/O slots of the IBM Personal Computer System Unit. This adapter 36 has cable connection to the base unit of the 3278 display station and cable connections to both the 3278 keyboard and the keyboard attachment on the mother board of the system unit. The relationship of the 3278 attachment adapter to the 3278 display station and the personal computer system unit is best shown in Figure 3 to which reference is now made.

In Figure 3, the same reference numerals as used in the preceding figures refer to the same components or circuits. Therefore, it will be understood that the several adapters shown in block diagram are plugged into the I/O slots in the system unit. The 3278 display unit 10 is represented as having a CRT 38 which is driven by analog circuits 40 in a conventional manner. The analog circuits 40 are controlled by digital logic and a regeneration buffer 42 which is also connected to the feature bus 44 and the keyboard adapter 46. Normally, the 3278 keyboard 12 would be connected to the keyboard adapter 46. In addition, the 3278 display station communicates with a host computer 48 via a 3274 controller 50.

4

The circuitry described thus far for the 3278 display unit 10 is conventional. For purposes of the subject invention, this circuitry is modified by the addition of an analog input switch 52. Normally, the output of the digital logic and regeneration buffer 42 goes through the analog circuits 40 to generate an image on the face of the CRT 38. However, the analog input switch 52 is introduced between the digital logic and regeneration buffer 42 and the analog circuits 40. The analog input switch has a second input which is connected to the colour graphics adapter 26 or optionally the monochrome monitor and parallel printer adapter (not shown in Figure 3). The analog input switch 52 thus allows the analog circuits 40 to be driven from the normal digital logic and regeneration buffer 42 of the 3278 display unit or from the output of a video adapter plugged into the personal computer system unit. The state of the analog input switch is controlled by the 3278 adapter 36.

The 3278 adapter 36 has four major sub-functions; the I/O interface function 54, the analog input switch control 56, the two-way keyboard adapter 58, and the feature bus adapter 60. The I/O interface function 54 allows the 3278 adapter 36 to meet the interface of the I/O slots of the personal computer system unit. The analog input switch control 56 is controlled by a personal computer program to cause the analog input switch 52 to switch states. Thus, the personal computer program has the capability to determine what is displayed on the face of the CRT 38; either the 3278 host image of the Personal Computer Display Adapter image. Because of the position of the analog input switch 52, the regeneration buffer 42 and its supporting logic operate as they did before installation of the PCAT feature. The same is true for the regeneration buffer and its supporting logic in either the colour graphics monitor adapter 26 or the monochrome monitor and parallel printer adapter 28. This allows the host program and the personal computer program to continue to generate images and send them to their respective regeneration buffers, thereby allowing concurrent operation of both the host program and the personal computer program.

The third sub-function in the 3278 adapter 36 is the two-way keyboard adapter 58 which also operates in conjunction with a personal computer program. In an unmodified 3278 display station, the keyboard 12 is plugged into the keyboard adapter 46; however, when the PCAT feature is installed, the keyboard 12 is plugged into the two-way keyboard adapter 58 using the existing 3278 keyboard cable and connector. The two-way keyboard adapter 58 accepts keystroke scan codes from the keyboard 12 and feeds them to the personal computer memory 62 via the I/O interface 54. The personal computer program is expected to interrogate these scan codes in memory 62, alter them (if necessary), send them back to the two-way keyboard adapter and direct whether the adapter output is sent to the existing keyboard adapters in the 3278 or personal computer. The program that performs this function is called the interrupt handler which, in addition, monitors the keyboard 12 operation for a unique key sequence which is the way the operator requests the interrupt handler to switch modes. When in the host mode, the CRT image and keystrokes are associated with the host program; when in the personal computer mode, the CRT image and keystrokes are associated with the personal computer program.

The feature bus adapter 60 provides circuits to connect the 3278 adapter 36 to the feature bus 44. The feature bus 44 normally supports such features as light pen, magnetic stripe readers, programmable symbol sets, and the like. This feature bus 44 mates with the feature bus adapter 60 of the 3278 adapter 36 to provide a relatively high speed two-way path for sending data from the host to the personal computer and vice versa.

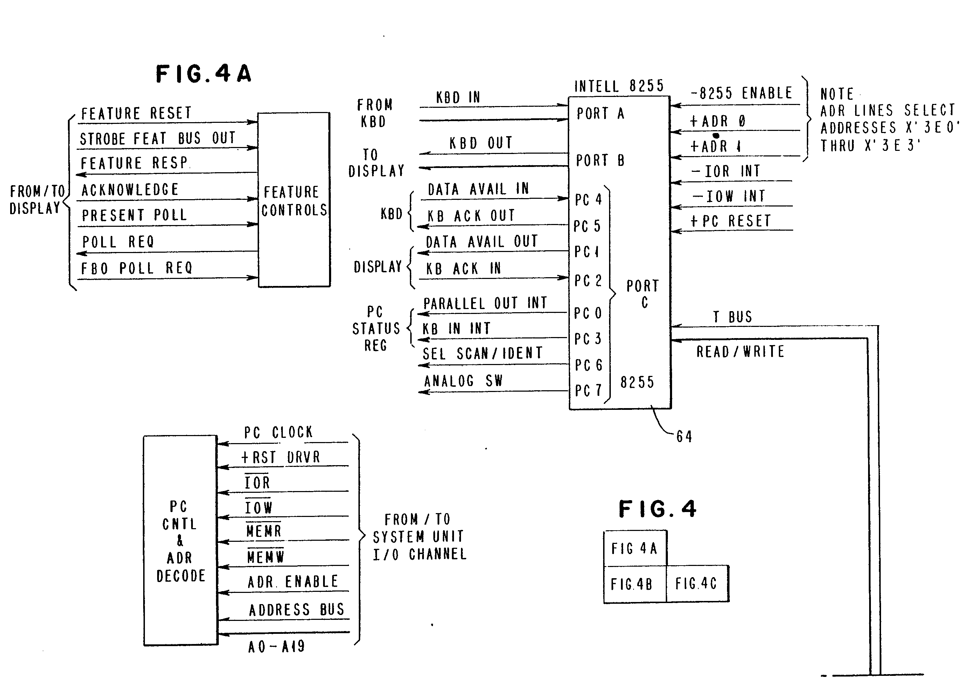

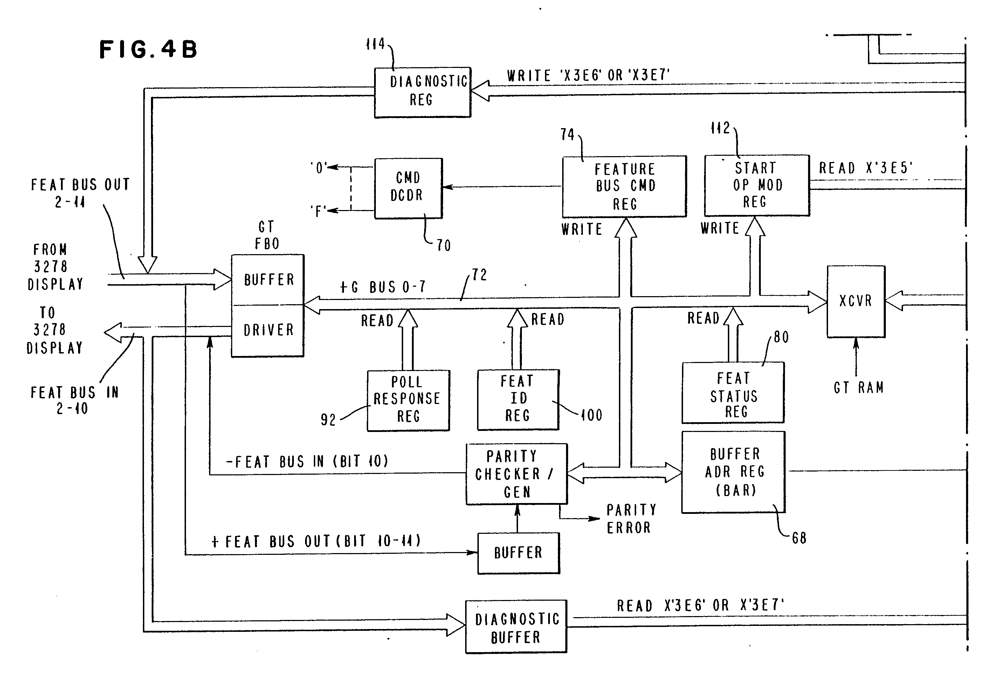

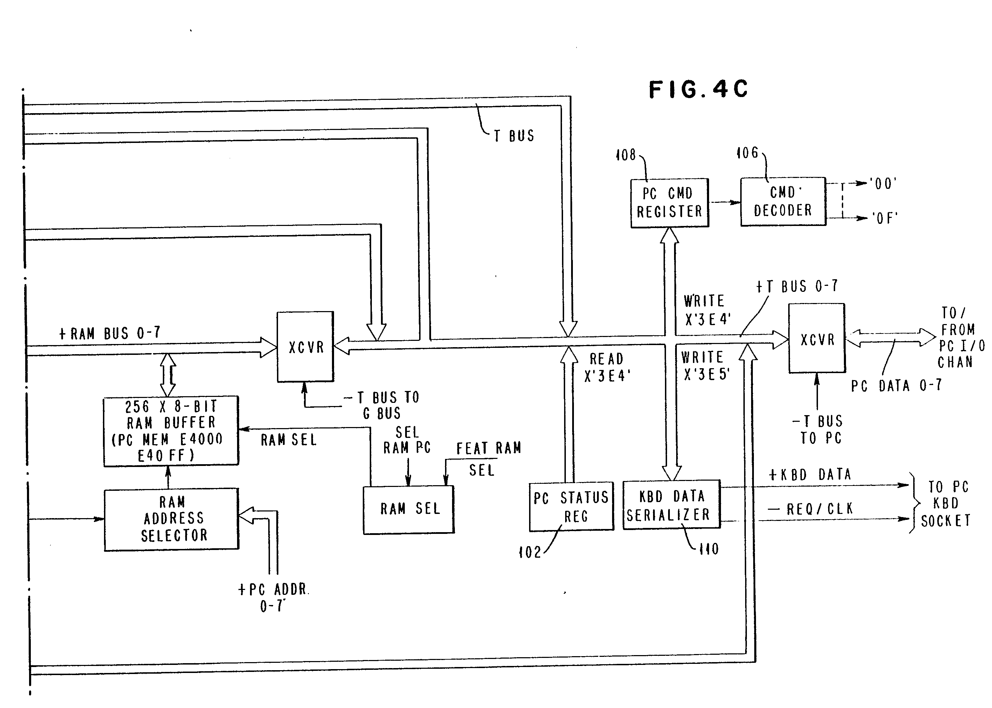

The 3278 attachment adapter 36 is shown in greater detail in Figure 4 and includes an 8255 programmable parallel interface controller 64 which provides the analog input switch control and the two-way keyboard adapter sub-functions. The adapter 36 has various addresses to which it responds. The following is a list of the various addresses for the various functions:

| PC I/O ADDRESS | FUNCTION |
|---|---|
| X'3E0' | 8255 Port A |
| X'3E1' | 8255 Port B |
| X'3E2' | 8255 Port C |
| X'3E3' | 8255 Control |
| X'3E4' | Read-PC Status, Write-Control |
| X'3E5' | Read-Start OP Modifier, Write-Keyboard Serialiser |
| X'3E6' | Diagnostics |
| X'3E7' | Diagnostics |

| PC MEM ADDRESS | FUNCTION |
|---|---|
| X'C4000—C40FF' | Buffer |

| FEATURE ADDRESS | FUNCTION |
|---|---|
| X'5' | All Feature Commands of 3274 |

The 3278 adapter 36 also includes a 256×8-bit RAM buffer 66 that can be written or read from by either the personal computer or by a feature command, but not simultaneously. The buffer resides in the personal computer memory address space starting at base address X'C4000'. The only time the personal computer is allowed access to the buffer 66 is the time when the feature has received a Start Op command until the personal computer responds with an Op Complete Pending. The only other time that the personal computer may have access to the buffer 66 is if the IPL complete latch has been reset. At all other times the buffer 66 is dedicated to the feature bus adapter. The feature bus reads the buffer 66 at the address specified by the buffer address register (BAR) 68 with either a Read Data or Read Multiple command. Data is written to the buffer 66 at the address specified by the buffer address register 68 with a Write command from the feature bus.

The buffer address register 68 is one byte wide. It is loaded with the Set Address Counter Low command from the 3274 controller. It can also be reest to zero with the Reset command from the 3274 controller. The buffer address 68 contains the address which is to be read or written to or by the 3274 controller.

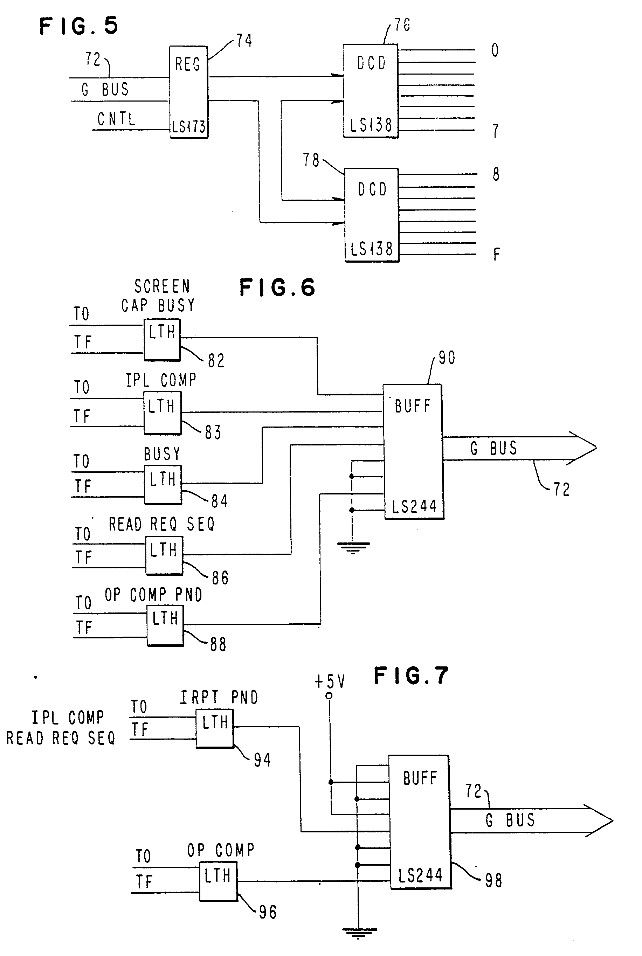

The feature command decoder 70 is connected to the G bus 72 by the feature command register 74. The decoder 70 is shown in more detail in Figure 5 and comprises two decoder circuits 76 and 78 connected to command register 74. These decoder circuits provide feature command outputs which are listed below:

| COMMAND | | DESCRIPTION |
|---|---|---|
| X'1' | | NOOP |
| X'2' | | Poll. Sends poll status to feature bus. |
| X'3' | | Reset. Sets Buffer Address Register to all zeros. |
| X'4' | | Read Data. Reads one byte of data. Increments Buffer Address Register. |
| X'5' | | Write BAR High. Loads the BAR high. |
| X'6' | | Write BAR Low. Loads the BAR low. |
| X'7' | | Read ID. Feature ID and Poll status sent to feature bus. |
| X'8' | | Start Op. Loads Start Op Modifier Register. |
| X'9' | | NOOP |
| NOOP | | NOOP |
| X'B' | | Read Multiple. Reads up to 4 bytes of data from buffer. |
| X'C' | | Write Data. Stores up to 256 bytes of data in the buffer. |
| X'D' | | NOOP |
| X'E' | | NOOP |
| X'F' | | Read Status. Sends Feature Status register to feature bus. |

Returning now to Figure 4, the feature status register 80 is one byte wide and provides an output to the G bus 72. This register is read only by the 3274 controller and is read using a read status command. Figure 6 shows the feature status register in more detail. It comprises five latches 82, 83, 84, 86, and 88 and a buffer 90. The following is a description of the bits in the feature status register beginning with the most significant bit:

| BIT | DESCRIPTION |
|---|---|
| 7 | Screen Capture Busy. Set by PC command when screen capture message is received. Reset by a PC command or PC reset or Reset. |
| 6 | IPL Complete. Set by PC command. Reset by PC command or PC reset. |
| 5 | Not Busy. Set by Feature Bus Adapter when 'Op Complete Pending' is set in Feature Status Register or PC Reset. Reset when a Start Op Modifier has been received. |
| 4 | Request Read. Set by PC command when it is ready for the 3274 to read the buffer. Reset by PC command or PC reset or Reset. |
| 3 | Reserved. |
| 2 | Reserved. |
| 1 | Op Complete Pending. Set by PC command. Reset by Acknowldge to feature Poll or PC reset or Reset. |
| 0 | Reserved. |

Returning again to Figure 4, the Feature Poll Response register 92 is connected to the G bus 72. This register is also 8 bits wide and is read only by the 3274 controller. As shown in Figure 7, Register 92 comprises two latches 94 and 96 and a buffer 98. The bit descriptions are given below beginning with the most significant bit:

6

| BIT | DESCRIPTION |
|---|---|

7    0
6    1    —Feature ID=X'5'
5    0
4    1
3    Feature Interrupt. Set if IPL complete has been activated or Request Read Sequence has been activated.
2    Reserved.
1    Reserved.
0    Op Complete. Set by PC command. Reset by Acknowledge to Poll or PC Reset or Reset.

Returning to Figure 4, the Feature ID Register 100 is also connected to the G bus 72 and is one byte wide. When a Read Feature ID command is decoded by the adapter, the Poll Status Register is gated onto the Feature Bus In. The data is the same as the Poll Response Register.

The PC Status Register 102 is connected to the T bus 104 and is one byte wide. This register is read only to the personal computer. It resides at I/O address X'3E4'. The following is a description of the bits of the PC Status Register beginning with the most significant bit:

| BIT | DESCRIPTION |
|---|---|

7    Reserved.
6    Poll Request Active. The bit is interrogated by the personal computer data transfer software to either allow the software to change the status bits (0) or to prohibit the change of status bits (1). It is set when any status bit is initially turned on and the present poll signal from the feature bus is present and is turned off by the feature bus poll acknowledge signal.
5    Display Type. This bit is a 1 for a 3278 and a 0 for a 3279.
4    Serial Port Busy. This bit is a 1 when the keyboard serialiser is busy. It is reset when the port becomes available or with PC reset.
3    Serial Port Interrupt. This bit is a 1 when the keyboard serial port has completed sending a character. It is reset by an adapter command or with PC Reset.
2    Start Op Interrupt. This bit is a 1 when the Start Op Modifier register has been loaded from the feature bus. The bit is reset when the Start Op Modifier register is read by the PC or with PC Reset.
1    Parallel Output Port Interrupt. This bit is a 1 when the parallel output port (8255 Port B) is available to accept another character. This bit is reset when data is sent to the port or by PC Reset.
0    Keyboard In Interrupt. This bit is a 1 when the adapter has received a character from the keyboard (8255 port A). This bit is reset when the data is read from the adapter or with PC Reset.

The PC command decoder 106 is connected to the T bus 104 by the PC command register 108. The decoder 106 is similar in construction to the feature command decoder 70 and so a detailed illustration of the decoder 106 is omitted from this description. The PC command register 108 is one byte wide and is write only. Thus register resides at I/O address X'3E4'. The following is a list of the commands decoded by the decoder 106:

7

| COMMAND | DESCRIPTION |
|---|---|
| X'00' | Turn off serial interrupt. Resets the keyboard serial I/O port. |
| X'01' | Turn on op complete pending. Turns the op complete pending bit on and causes a poll request to the 3278/9. |
| 'X02' | Turn off read request sequence. |
| 'X03' | Turn on read request sequence. |
| 'X04' | Turn off Screen Capture Busy. |
| 'X05' | Turn on Screen Capture Busy. |
| 'X06' | Turn off Test Mode. |
| 'X07' | Turn on Test Mode. |
| 'X08' | Turn off Keyboard Clicker Gate. |
| 'X09' | Turn on Keyboard Clicker Gate. |
| 'X0A' | Turn off 3278 Display gate. |
| 'X0B' | Turn on 3278 Display gate. |
| 'X0C' | Turn off IPL Complete. |
| 'X0D' | Turn on IPL Complete. |
| 'X0E' | Turn off Diagnostic Mode. |
| 'X0F' | Turn on Diagnostic Mode. |

The adapter 36 uses an 8255 programmable parallel interface controller 64 to interface to the keyboard 12, the keyboard adapter 46, and the analog switch control 56. The 8255 programmable parallel interface controller is a commercially available integrated circuit and, like the 8088 microprocessor in the personal computer system unit, is manufactured by Intel Corporation. Additional information on the 8255 programmable parallel interface controller may be obtained from the Intel Data Book. The controller 64 has four ports identified as Ports A, B, C and D. These ports, their I/O addresses and a description of their use are listed below:

| PORT | ADDRESS | DESCRIPTION |
|---|---|---|
| A | X'3E0' | This port is to be used to read the keyboard. |
| B | X'3E1' | This port is to be used to send keyboard data to the 3278/9. |
| C | X'3E2' | This port has multiple uses. It is used for the control signal for ports A and B, and analog switch control, and control to select which input is read into port A (i.e. 3278/9 keyboard data or 3278/9 keyboard identity code). |
| D | X'3E3' | This is the control register for the 8255. |

The keyboard serialisation register 110 is write only and resides at I/O address X'3E5'. The data written to this register will be serialised and set to the PC keyboard input socket. After a keystroke has been read in from the keyboard 12, the PC software determines where to send the data. If the attachment is in the PC Mode, the keystroke will be mapped to a corresponding PC keyboard scan-code. Next the new scan-code will be output to the keyboard serialiser 110. Writing this register causes PC Status Bit 4 (Serial Port Busy) to become active. When the serialisation is complete, Bit 4 will be reset and Bit 3 (Serial Port Interrupt) will be set. The data sent to this port will be serialised in the following order: First, a parity bit will be sent out. Second, the data will be sent out with the least significant bit sent first. This port is not bi-directional and therefore does not respond to the PC keyboard software reset command.

The Start OP Modifier Register 112 is read only from the PC. It is used to pass control information between the 3274 controller and the PC during data transfers. It resides at I/O address X'3E5'. This register is loaded from the feature bus with a Start Op Command. The register being loaded causes PC Status Bit 2 (Start Op Interrupt to be set. The bit is reset when the PC reads the Start Op Modifier Register 112.

Keyboard Out at Port B of the 8255 controller 64 is the interface which sends keystrokes from the PC to the 3278/9. The interface is fully asynchronous. Port B of the 8255 controller 64 is used in strobed output mode to send data to the 3278/9. After a character is loaded into the 8255 controller, the "Data Avail Out" line is activated. The 3278/9 then responds by activating "KB Ack Out" and deactivating the "Data Avail Out" line. This causes the 8255 controller to activate the interrupt request. This interrupt signals that the 8255 controller is available to receive more data. To avoid sending erroneous data to the 3278/9 during IPL and reconfiguration of the 8255 controller, the "Data Avail Out" line is gated with the display gate latch. When this latch is set, data is enabled· to be sent to the 3278/9.

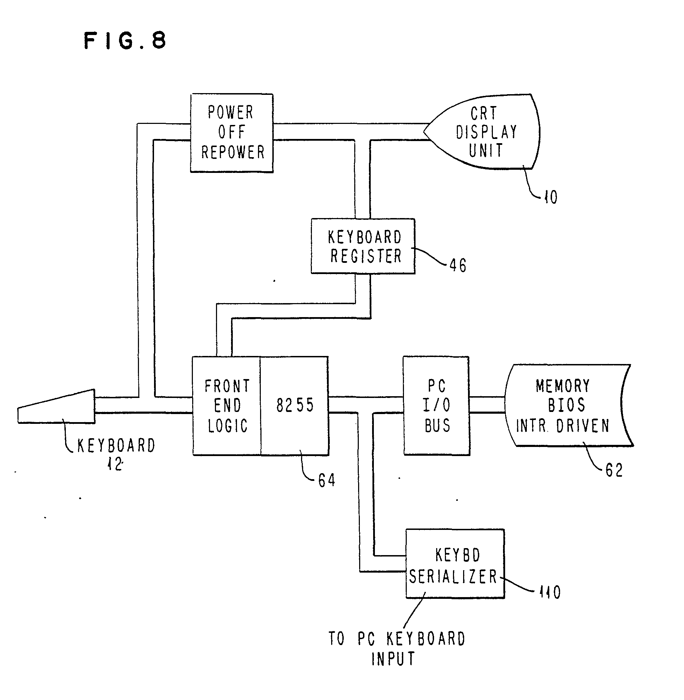

Figure 8 is a functional block diagram which summarises the keyboard data paths just described. Note that the 8255 controller 64 operates as the two-way keyboard adapter 58 shown in Figure 3. An important aspect of this arrangement is that, if the personal computer application fails, then the operator can, using the keystroke sequence, switch to the host mode and continue the host operations. This is made possible by powering the front end of the two-way keyboard adapter directly from the 3278 display station. The front end of the two-way keyboard adapter is that section of the logic which accepts keystroke information from the keyboard and directs it either to the 3278 or to the personal computer. Additionally, if power is removed

8

from the personal computer, then keystroke data is automatically redirected from the front end of the two-way adapter to the display station rather than to the personal computer without requiring the operator to invoke the switch-over key sequencing so that host operation can be maintained.

Returning again to Figure 4, the diagnostic register 114 contains the ten feature bus out bits as well as strobe feature bus out, Poll acknowledge, and Reset features. This register can be written by the Diagonstic program via the PC I/O bus. Two additional I/O addresses are decoded in the adapter for this purpose. With the feature bus cable disconnected, the Diagnostic program is able to manipulate this bus (feature bus out) to simulate feature commands and data.

The diagnostic buffer 116 is attached to the feature bus in (bits 2 to 10), feature response, poll request, and the analog switch control. The buffer 116 can be activated by the Diagnostic program via the PC I/O bus. Two I/O addresses are decoded for this function. With the feature bus cable disconnected, the Diagnostic program is able to detect feature responses and data.

Data transfer between the personal computer and the host program consists of file transfer and screen capture. File transfer is enabled by the 3274 controller 50 microcode which recognises certain structured fields in the host data stream and directs the data to the feature bus 44 instead of the regeneration buffer 42 of the 3278/9 display station as shown in Figure 3. The personal computer can accept the data and act on it immediately or store it on diskette for later use with other PC programs. In addition, data can be taken from the diskette and sent via the feature bus 44 and the 3274 controller 50 to the host 48. This same ability to transmit data from the personal computer to the host permits a PC program to perform a function called "upload". With this function, an operator signs on to the host system in the normal manner. Then the operator can invoke a keystroke generation program in the personal computer. This program produces the keystrokes which are sent to the host 48 and appear to be macro-language instructions. These instructions are a bootstrap program which bring in the rest of the file transfer program. This file transfer program is a private exec which the operator now owns. It is permanently stored at the host 48 and available for use any time the operator invokes it. It only requires this upload once. Other uses can be envisioned for the automatic keyboard operations just described. For example, there could be automatic sign on or automatic generation of any keystroke sequence that the operator wishes to define.

Screen capture is the equivalent of the 3270 local-copy function and of the IBM Personal Computer print-screen function. Screen capture permits an operator to obtain a hard copy of the screen image or to copy the screen image to the system unit diskette. The only place within the display sub-system that the screen image resides is in the regeneration buffers. If the analog switch 52 currently connects the regeneration buffer to the analog circuits 40, then the host data image is displayed. The 3274 controller 50 has microcode to unload that screen image from the regeneration buffer 42 into the 3274 controller 50 and redirect it out through the feature bus 44 to the PC system unit 14. The system unit 14 then directs this screen image data to either the printer 18 or a diskette drive 16 via the corresponding adapter. If on the other hand the analog switch 52 connects the output of a PC monitor adapter, either the colour graphics adapter 26 or the monochrome monitor and parallel printer adapter 28, to the analog circuits 40, then the image displayed is the PC program image. This image may be printed in the usual manner since it is already resident in the PC system unit. This capability for local copy also makes it possible for programs to be written to operate on the screen image in whatever way the programmer desires.

**Claims**

1. A personal computer attachment for a display station of the type that communicates with a host computer (48), the display station having a display unit (10) and a keyboard (12), the display unit having display means (38) for displaying the image data and first buffer means (42) for receiving image data from the host computer and supplying the image data to the display means, the attachment comprising:
a personal computer system unit (22) including a system bus, a microprocessor (8088) and memory means connected to the system bus, the memory means including second buffer means for supplying image data to a display means;
switch means (52) connected to the display means for selectively supplying host image data from the first buffer means in the display unit or personal computer data from the second buffer means in the personal computer; and
adapter means (36) connected to the personal computer system bus for communicating with the display unit, the keyboard being attached to the adapter means for selectively inputting data to the host computer or the personal computer, the adapter means including switch control means (56) responsive to a keyboard input for controlling the switch means.

2. An attachment as claimed in claim 1, wherein the display station itself is of the type that communicates with the host computer (48) for the purpose of accessing data and running programs on the host computer, and includes keyboard adapter means (46) for receiving keyboard signals, feature bus means (44) for providing an interface to a controller (50) external to the display station, and means for providing a communication link between the buffer means, the keyboard adapter means and the feature bus means and the host computer;
the personal computer system unit including a keyboard adapter connected to the system bus, and input/output means connected to the system bus for providing an interface to external devices such means including a display adapter (26 or 28) which incorporates the buffer for supplying image data to a display means; the attachment adapter (36) further including an input/output interface (54), a two-way keyboard adapter (58), and a feature bus adapter (60), the keyboard being connected to the two-way keyboard adapter, and each of the switch control means (56), two-way keyboard adapter and feature bus adapter communicating with the system bus of the personal computer system unit via the input/output interface, the switch control further being connected to a control input of the switch means, the two-way keyboard adapter further being connected to the keyboard adapter means in the display station and to the keyboard adapter in the personal computer system unit, and the feature bus adapter further being connected to the feature bus means in the display station whereby keystroke signals from the keyboard are transmitted by the two-way keyboard adapter via the input/output interface and system bus to the memory means of the personal computer for interpretation by the microprocessor and then retransmitted back to the two-way keyboard adapter and either to the keyboard adapter means in the display system or to the keyboard adpater in the personal computer system unit, and the switch control being responsive to a unique keystroke signal generated by the keyboard to control the switch means.

3. An attachment as claimed in claim 2, wherein the input/output means in the personal computer system unit further includes a bulk storage media adapter (24) and a printer adapter (30), the attachment further including bulk storage media means (16) and printer means (18) connected respectively to the bulk storage media adapter and the printer adapter.

4. An attachment as claimed in claim 2 or claim 3, further comprising means responsive to a keyboard command for unloading the buffer means in the display station and transmitting the image data that was stored in the buffer means to the personal computer via the feature bus means and the feature bus adapter.

5. An attachment as claimed in any one of claims 2 to 4, further comprising means for transmitting data from a host computer to either the buffer means in the display unit or the personal computer system unit via the feature bus means and the feature bus adapter.

6. An attachment as claimed in any one of claims 2 to 5, further comprising means for transmitting data from the personal computer to a host computer via the feature bus adapter and the feature bus means, the data being generated either by signals from the keyboard or a program run on the personal computer.

7. An attachment as claimed in any one of claims 2 to 6, wherein the two-way keyboard adapter includes logic that accepts keystroke information from the keyboard and directs it either to the display unit or the personal computer, the logic being powered by the display unit so that if there is a failure in the personal computer, the operator can switch to a host mode of operation using a keystroke sequence.

**Patentansprüche**

1. Personalcomputeranschluß für eine Anzeigeeinrichtung mit Verbindung zu einem Host-Computer (48) mit einer Anzeigeeinrheit (10) und einer Tastatur (12), wobei die Anzeigeeinheit Anzeigeglieder (38) zur Anzeige von Bilddaten und erste Pufferglieder (42) zur Aufnahme der Bilddaten vom Host-Computer und zum Zuführen der Bilddaten zu den Anzeigegleidern umfaßt gekennzeichnet durch,

eine Personalcomputersystemeinheit 22 mit einem System-Bus, einem Microprocessor (8088) und an dem System-Bus angeschlossenen Speichergliedern, wobei die Speicherglieder zweite Pufferglieder zum Zuführen der Bilddaten zu den Anzeigegliedern einschließen;

Schaltglieder (52), die mit den Anzeigegliedern zum selektiven Zuführen von Host-Bilddaten von den ersten Puffergliedern in die Anzeigeeinheit oder von Personalcomputerdaten von den zweiten Puffergliedern in der Personalcomputer verbunden sind; und

Anpaßglieder (36), die mit dem Personalcomputer-System-Bus zum Datenaustausch mit der Anzeigeeinheit verbunden sind und die an der Tastatur angeschlossen sind zum selektiven Eingeben der Daten an den Hostcomputer oder an den Personalcomputer, wobei die Anpaßglieder Schaltkreissteuerglieder (56) umfassen, die auf Tastatur- Eingangswerte zur Steuerung der Schaltglieder ansprechen.

2. Computeranschluß nach Anspruch 1, dadurch gekennzeichnet, daß die Anzeigeeinrichtung selbst so ausgebildet ist, daß sie mit dem Host-Computer (48) zum Zwecke des Datenzugriffes und Programmablaufes in dem Host-Computer kommuniziert und daß sie Tastaturanpaßglieder (46) zum Empfang von Tastatursignalen, Zusatz-Bus-Glieder (44) zur Versorgung eines Interfaces zu einem externen Steuergerät (50) und zu den Anzeigeeinrichtung Schaltkreisglieder zum Herstellen einer Verbindung zwischen den Puffergliedern, den Tastaturanpaßliedern und den Zusatz-Bus-Gliedern und dem Hostcomputer;

die Personalcomputersystemeinheit einen Tastaturadapter enthält, der mit dem System-Bus verbunden ist, sowie Eingangs-/Ausgangsschaltglieder, die mit dem System-Bus zur Versorgung eines Interfaces zu externen Einheiten einschließlich eines Displayadapters (26 oder 28) verbunden sind, welcher den Puffer zur Zuführung der Bilddaten zu den Anzeigegliedern enthält;

der Anschlußadapter (36) weiter ein Eingangs-/Ausgangs-Interface (54), einen Zweiweg-Tastaturadapter (58) und einen Zusatz-Busadapter (60) umfaßt, wobei die Tastatur mit dem Zweiweg-Tastaturadapter verbunden ist, und wobei jede der Schaltsteuergliedern (56), der Zweiweg-Tastaturadapter und der Zusatz-Busadapter zusammenwirken mit dem System-Bus der Personalcomputersystemeinheit über das Eingangs-/Ausgangs-Interface, die Schaltsteuerung weiter verbunden ist mit einem

# 0 121 603

Steuereingang der Schaltglieder, der Zweiweg-Tastaturadapter darüberhinaus verbunden ist mit den Tastaturadapterschaltgliedern in der Anzeigeeinrichtung und mit dem Tastaturadapter in der Personalcomputersystemeinheit und wobei der Zusatz-Bus Adapter darüber hinaus verbunden ist mit den Zusatz-Busgliedern in der Anzeigeeinrichtung, wobei Tastenanschlagsignale von der Tastatur übertrgen werden durch den Zweiweg Tastaturadapter über das Eingangs-/Ausgangs-Interface und dem System-Bus zu den Speichergliedern des Personalcomputers für Interpretation durch den Microprocessor und dann rückübertragen werden zu dem Zweiweg-Tastaturadapter und entweder zu den Tastaturadaptergliedern in dem Anzeigesystem oder zu dem Tastaturadapter in dem Personalcomputersystem, und die Schaltsteuerung auf ein durch die Tastatur zur Steuerung der Schaltglieder erzeugtes einmaliges Anschlagsignal reagiert.

3. Computeranschluß nach Anspruch 2, dadurch gekennzeichnet, daß die Eingang-/Ausgangsglieder in der Personalcomputersystemeinheit weiter einen Großspeichermedienadapter (24) und einen Druckeradapter (30) sowie ferner Großspeichermedienglieder (16) und Druckergliedern (18) umfassen, die mit dem Großspeichermedienadapter bzw. dem Druckeradapter verbunden sind.

4. Computeranschluß nach Anspruch 2 oder 3, dadurch gekennzeichnet, daß auf ein Tastaturkommando ansprechende Schaltglieder zum Entladen der Pufferglieder in der Anzeigestation und zum Übertragen der Bilddaten, die in den Puffergliedern gespeichert sind, zu dem Personalcomputer über die Zusatzbusglieder und den Zusatz-Busadapter vorgesehen sind.

5. Computeranschluß nach einem der Ansprüche 2 bis 4, dadurch gekennzeichnet, daß Schaltglieder zum Übertragen der Daten von einem Host-Computer entweder zu den Puffergliedern in der Anzeigeeinheit oder dem Personalcomputersystem über die Zusatzbusglieder und dem Zusatzbusadapter vorgesehen sind.

6. Computeranschlß nach einem der Ansprüche 2 bis 5, dadurch gekennzeichnet, daß zur Übertragung der Daten von dem Personalcomputer zu einem Host-Computer über den Zusatzbusadapter und den Zusatzbusgliedern Schaltglieder vorgesehen sind, wobei die Daten entweder durch Signale von vorgesehen sind, wobei die Daten entweder durch Signale von der Tastatur oder einem Programmlauf auf dem Personalcomputer erzeugt sind.

7. Computeranschluß nach einem der Ansprüche 2 bis 6, dadurch gekennzeichnet, daß die Zweiweg-Tastaturadpter eine Logik umfaßt, die Tastenanschlagsinformationen von der Tastatur akzeptiert und diese entweder an die Anzeigeeinheht oder den Personalcomputer liefert, wobei die Logik von der Displayeinheit vorsorgt wird, so daß, wenn ein Fehler im Personalcomputer auftritt, der Operator auf die Host Arbeitsweise umschalten kann unter Verwendung einer Tastaturanschlagssequenz.

## Revendications

1. Connexion à un ordinateur personnel pour un poste d'affichage du type qui communique avec un ordinateur hôte (48), le poste d'affichage comprenant un module d'affichage (10) et un clavier (12), le module d'affichage comprenant des moyens d'affichage (38) pour afficher des données d'image et des premiers moyens tampons (42) pour recevoir des données d'image de l'ordinateur hôte et fournir les données d'image aux moyens d'affichage, la connexion comprenant:
un module de système d'ordinateur personnel (22) comprenant un bus de système, de microprocesseur (8088) et des moyens de mémoire connectés au bus de système, les moyens de mémoire comprenant des seconds moyens tampons pour fournir des données d'image à des moyens d'affichage;
des moyens de commutation (52) connectés aux moyens d'affichage pour fournir sélectivement des données d'image de l'hôte à partir des premiers moyens tampons dans le module d'affichage ou des données de l'ordinateur personnel à partir des seconds moyens tampons dans l'ordinateur; et
des moyens adaptateurs (36) connectés au bus de système de l'ordinateur personnel pour communiquer avec le module d'affichage, le clavier étant lié au moyen adaptateur pour introduire sélectivement des données vers l'ordinateur hôte ou l'ordinateur personnel, les moyens adaptateurs comprenant des moyens de commande de commutation (56) agissant en réponse à une entrée du clavier pour commander les moyens de commutation.

2. Connexion selon la revendication 1, dans laquelle le poste d'affichage lui-même est du type qui communique avec l'ordinateur hôte (48) dans le but d'accéder à des données et de faire tourner des programmes sur l'ordinateur hôte, et comprend des moyens adaptateurs de clavier (46) pour recevoir des signaux de clavier, des moyens de bus de caractéristiques (44) pour servir d'interface à un contrôleur (50) externe au poste d'affichage, et des moyens pour fournir une liaison de communication entre les moyens tampons, les moyens adaptateurs de clavier et les moyens de bus de caractéristiques et l'ordinateur hôte;
le module de système d'ordinateur personnel comprenant un adaptateur de clavier connecté au bus de système et des moyens d'entrée/sortie connectés au bus de système pour servir d'interface à des dispositifs externes tels que des moyens comprenant un adaptateur d'affichage (26 ou 28) qui comprend le tampon pour fournir des données d'image à un moyen d'affichage;
l'adaptateur de connexion (36) comprenant en outre une interface d'entrée/sortie (54), un adaptateur de clavier bidirectionnel (58) et un adaptateur de bus de caractéristiques (60), le clavier étant connecté à l'adaptateur de clavier bidirctionnel, et chacun des moyens de commande de commutation (56), de l'adaptateur de clavier bidirectionnel et de l'adaptateur de bus de caractéristiques communiquant avec le

11

bus de système du module de système d'ordinateur personnel par l'intermédiaire de l'interface d'entrée/sortie, la commande de commutation étant en outre connectée à une entrée de commande des moyens de commutation, l'adaptateur de clavier bidirectionnel étant en outre connecté aux moyens adaptateurs de clavier dans le poste d'affichage et à l'adaptateur de clavier dans le module de système d'ordinateur personnel, et l'adapateur de bus de caractéristiques étant en outre connecté aux moyens de bus de caractéristiques dans le poste d'affichage, d'où il résulte que des signaux de frappe de touches en provenance du clavier sont transmis par l'adaptateur de clavier bidirectionnel par l'intermédiaire de l'interface d'entrée/sortie et du bus de système aux moyens de mémoire de l'ordinateur personnel pour interprétation par le microprocesseur et ensuite réémis vers l'adaptateur de clavier bidirectionnel et, ou bien vers les moyens adaptateurs de clavier dans le système d'affichage, ou bien vers l'adaptateur de clavier dans le module de systèxe d'ordinateur personnel, et la commande de commutation agissant en réponse à un signal de frappe de touche spécifique produit par le clavier pour commander les moyens de commutation.

3. Connexion selon la revendication 2, dans laquelle les moyens d'entrée/sortie dans le module de système d'ordinateur principal comprennent en outre un adaptateur de milieu de mémorisation de masse (24) et un adaptateur d'imprimante (30), la connexion comprenant en outre des moyens de milieu de mémoire de masse (16) et des moyens d'impression (18) connectés respectivement à l'adaptateur de milieu de mémoire de masse et à l'adaptateur d'imprimante.

4. Connexion selon la revendication 2 ou la revendication 3, comprenant en outre des moyens agissant en réponse à une commande de clavier pour décharger les moyens tampons dans le poste d'affichage et transmettre les données d'image qui étaient mémorisées dans les moyens tampons vers l'ordinateur personnel par l'intermédiaire des moyens de bus de caractéristiques et de l'adaptateur de bus de caractéristiques.

5. Connexion selon l'une quelconque des revendications 2 à 4, comprenant en outre des moyens pour émettre des données à partir d'un ordinateur hôte vers ou bien les moyens tampons dans le module d'affichage ou bien le module de système d'ordinateur personnel par l'intermédiaire des moyens de bus de caractéristiques et de l'adaptateur de bus de caractéristiques.

6. Connexion selon l'une quelconque des revendications 2 à 5, comprenant en outre des moyens pour émettre des données à partir de l'ordinateur personnel vers un ordinateur hôte par l'intermédiaire de l'adaptateur de bus de caractéristiques et des moyens de bus de caractéristiques, les données étant produites ou bien par des signaux en provenance du clavier ou bien par le passage d'un programme sur l'ordinateur personnel.

7. Connexion selon l'une quelconque des revendications 2 à 6, dans laquelle l'adaptateur de clavier bidirectionnel comprend une logique qui accepte des informations de frappe de touche en provenance du clavier et les dirige ou bien vers le module d'affichage ou bien vers l'ordinateur personnel, la logique étant alimentée par le module d'affichage de sorte que, s'il existe une panne dans l'ordinateur personnel, l'opérateur peut effectuer une commutation vers un mode de fonctionnement hôte en utilisant une séquence de frappes de touches.

FIG. 1

# FIG.2A

POWER SUPPLY

| POWER SUPPLY | | | | |
|---|---|---|---|---|
| 63 5 WATTS 4 LEVELS | | | | |

| · CSC · CLK · CNTRL | 8088 MAIN PROCESSING UNIT | 20 BIT 4 CH DMA | 3 CH 16 BIT T/C | 8 LEV INTR |
|---|---|---|---|---|
| CASSETTE ATTACHMENT | ROS 8K X8 | ROS 8K X8 | | RAM 16K X8 |
| SPEAKER ATTACHMENT | ROS 8K X8 | ROS 8K X8 | | RAM 16K X8 |
| | ROS 8K X8 | ROS 8K X8 | | RAM 16K X8 |
| KEYBOARD ATTACHMENT | I/O CHANNEL | | | RAM 16K X8 |

SYSTEM BOARD 22

5 I/O EXPANSION SLOTS

PC ATTACHMENT ADAPTER

26

32

64KB MEMORY EXPANSION OPTION

12

5 1/4" DISKETTE DRIVE ADAPTER

24

26

COLOR/GRAPHICS MONITOR ADAPTER

16

16

INTERNAL 5 1/4" DISKETTE DRIVES

FIG.2B

28 — MONOCHROME DISPLAY & PARALLEL PRINTER ADAPTER

34 — ASYNCHRONOUS COMMUNICATIONS ADAPTER

CURRENT LOOP

RS-232-C

PARALLEL PRINTER ADAPTER

30

10

18

18

# FIG.3

## FIG.4A

FROM/TO DISPLAY {
FEATURE RESET
STROBE FEAT BUS OUT
FEATURE RESP.
ACKNOWLEDGE
PRESENT POLL
POLL REQ
FBO POLL REQ
} FEATURE CONTROLS

FROM KBD
KBD IN
TO DISPLAY
KBD OUT

INTELL 8255
PORT A
PORT B

-8255 ENABLE
+ADR 0
+ADR 1
—IOR INT
—IOW INT
+PC RESET

NOTE:
ADR LINES SELECT
ADDRESSES X'3E0'
THRU X'3E3'

KBD {
DATA AVAIL IN      PC 4
KB ACK OUT         PC 5
}

DISPLAY {
DATA AVAIL OUT     PC 1
KB ACK IN          PC 2
}

PC STATUS REG {
PARALLEL OUT INT   PC 0
KB IN INT          PC 3
SEL SCAN/IDENT     PC 6
ANALOG SW          PC 7
}

PORT C
8255

64

T BUS
READ/WRITE

PC CNTL & ADR DECODE
PC CLOCK
+RST DRVR
IOR
IOW
MEMR
MEMW
ADR. ENABLE
ADDRESS BUS
A0 — A19

FROM / TO SYSTEM UNIT I/O CHANNEL

## FIG.4

| FIG 4A | |
|--------|--------|
| FIG.4B | FIG.4C |

0 121 603

# FIG. 4B

FEAT BUS OUT 2-11

FROM 3278 DISPLAY

TO 3278 DISPLAY

FEAT BUS IN 2-10

DIAGNOSTIC REG 114

WRITE 'X3E6' OR 'X3E7'

'0'
'F'

CMD DCDR 70

FEATURE BUS CMD REG 74

WRITE

START OP MOD REG 112

WRITE

READ X'3E5'

GT FBO

BUFFER

DRIVER

+ G BUS 0-7 72

READ

READ

READ

XCVR

GT RAM

POLL RESPONSE REG 92

FEAT ID REG 100

FEAT STATUS REG 80

- FEAT BUS IN (BIT 10)

PARITY CHECKER / GEN

PARITY ERROR

BUFFER ADR REG (BAR) 68

+ FEAT BUS OUT (BIT 10-11)

BUFFER

DIAGNOSTIC BUFFER

READ X'3E6' OR X'3E7'

0 121 603

# FIG.4C

T BUS

108 PC CMD REGISTER

106 CMD DECODER → '00'

'OF'

+RAM BUS 0-7

XCVR

−T BUS TO G BUS

256 X 8-BIT RAM BUFFER (PC MEM E4000 E40 FF)

RAM SEL

SEL RAM PC

FEAT RAM SEL

RAM SEL

WRITE X'3E4'

+T BUS 0-7

XCVR

TO/ FROM PC I/0 CHAN

PC DATA 0-7

−T BUS TO PC

RAM ADDRESS SELECTOR

READ X'3E4'

WRITE X'3E5'

PC STATUS REG

KBD DATA SERIALIZER

+KBD DATA

−REQ/CLK

TO PC KBD SOCKET

102

110

+PC ADDR. 0-7

0 121 603

7

**FIG.5**

**FIG.6**

**FIG.7**

# F I G. 8